# EUROPÄISCHE PATENTSCHRIFT

(11) **EP 2 505 780 B1**
(45) Veröffentlichungstag und Bekanntmachung des Hinweises auf die Patenterteilung: **11.05.2016**
(21) Anmeldenummer: 11160764.4
(22) Anmeldetag: 01.04.2011
(51) Int. Cl.: B23P 15/04, F01D 5/10, F01D 5/02, F01D 5/14, F01D 5/16, F01D 5/22, F04D 29/32, F04D 29/66

(54) **Schaufelanordnung für eine Turbomaschine**
Blade assembly for a turbo engine
Agencement d'aubes pour une turbomachine

(43) Veröffentlichungstag der Anmeldung: 03.10.2012
(73) Patentinhaber: MTU Aero Engines AG, 80995 München (DE)
(72) Erfinder: Wöhler, Marcus, Dr., 82178 Puchheim (DE); Schönenborn, Harald, Dr., 85757 Karlsfeld (DE)

(56) Entgegenhaltungen:
- EP-A1- 1 881 163
- EP-A1- 2 221 454
- DE-A1-102007 051 499
- FR-A1- 2 291 349
- FR-A1- 2 329 845
- FR-A1- 2 944 049
- FR-A1- 2 944 050
- GB-A- 252 701
- GB-A- 2 251 034
- JP-A- 2000 170 502
- US-A- 5 511 948
- US-A1- 2010 239 423

## Beschreibung

Die vorliegende Erfindung betrifft eine Schaufelanordnung für eine Turbomaschine, insbesondere eine Gasturbine, eine Turbomaschine mit sowie ein Verfahren zur Herstellung einer solchen Schaufelanordnung.

Laufschaufeln weisen aufgrund ihrer Materialelastizität natürliche bzw. Eigenmoden auf. Unter Moden werden vorliegend in fachüblicher Weise Eigenfrequenzen und/oder -formen verstanden, insbesondere eine erste oder höhere Biege- oder Torsionseigenform bzw. -frequenz.

Im Betrieb werden Laufschaufeln, insbesondere durch instationäre Wechselwirkungen mit dem Arbeitsfluid der Turbomaschine, zu Schwingungen angeregt. Liegt eine solche Anregung in der Nähe einer Eigenfrequenz, kann es zu Resonanzen oder Flattern kommen, was die Energieumsetzung mit dem Arbeitsfluid beeinträchtigt und die Turbomaschine, insbesondere ihre Schaufeln, belastet.

Aus den gattungsbildenden US-Patenten US 6,471,482 und US 4,097,192 ist es daher bekannt, Schaufeln gegeneinander zu verstimmen, d.h. Schaufeln mit unterschiedlichen Eigenmoden anzuordnen, so dass eine Anregung stets nur mit der Eigenfrequenz eines Teils der Schaufeln übereinstimmt. Vorteilhaft können demgegenüber "verstimmte" Schaufeln mit anderen Eigenfrequenzen eine Resonanz bzw. ein Flattern reduzieren. Hierzu variieren in der US 6,471,482 die Schaufelblattdicken. In der US 4,097,192 sind im rotorabgewandten Schaufelkopf einiger Schaufeln leere oder mit Fremdmaterial gefüllte Aussparungen ausgebildet. Beide Druckschriften betreffen deckbandlose Schaufelanordnungen, da einander kontaktierende Deckbänder als alternative Bekämpfung anstelle der Verstimmung einzelner Schaufeln gesehen wird. Des weiterem zeigt die JP 2000170502 alle Merkmale des Oberbegriffs von Anspruch 1.

Aufgabe der vorliegenden Erfindung ist es, eine Turbomaschine, insbesondere Gasturbine, mit einer verbesserten Schaufelanordnung zur Verfügung zu stellen.

Zur Lösung dieser Aufgabe ist eine Schaufelanordnung nach dem Oberbegriff des Anspruchs 1 durch dessen kennzeichnendes Merkmal weitergebildet. Ansprüche 6, 7 stellen eine Turbomaschine mit bzw. ein Verfahren zur Herstellung einer erfindunggemäßen Schaufelanordnung unter Schutz. Die Unteransprüche betreffen vorteilhafte Weiterbildungen.

Nach dem Aspekt der vorliegenden Erfindung wird vorgeschlagen, einer Verstimmung durch Variation der Schaufelblätter-Deckbänder zu variieren und so Schaufeln einer Schaufelanordnung gegeneinander zu verstimmen. Allgemein weisen hierzu zwei oder mehr benachbarte Schaufeln planmäßig unterschiedliche Deckbänder auf. Unter planmäßig wird vorliegend insbesondere verstanden, dass Unterschiede gezielt vorgesehen werden. Dies kann insbesondere dadurch erfolgen, dass Schaufeln, deren Deckbänder aufgrund von Herstellungstoleranzen streuen, sortiert und dann gezielt ausgewählt werden. In einer bevorzugten Ausführung werden unterschiedliche Schaufeln jedoch bereits planmäßig hergestellt, d.h. es werden, etwa durch entsprechende vorgegebene Variationen im Herstellungsprozess, insbesondere durch zusätzliche oder entfallende, insbesondere spanende, Fertigungsschritte, von vorneherein unterschiedliche Schaufeln hergestellt.

Schaufeln mit unterschiedlichen Deckbändern, die vorliegend als unterschiedliche Schaufeln bezeichnet werden, unterscheiden sich gemäß dem ersten Aspekt in einem oder mehreren Eigenmoden, d.h. Eigenfrequenzen und/oder -formen. Hierzu können Deckbänder insbesondere unterschiedliche Massen, Massenverteilungen und/oder Trägheitsmomente aufweisen. Es ist hierzu in einem Deckband einer Schaufel eine Aussparungsanordnung mit einer, zwei oder mehr Aussparungen ausgebildet, während in einem Deckband bzw. einer inneren Schaufelplattform wenigstens einer anderen, insbesondere benachbarten Schaufel, keine oder eine andere Aussparungsanordnung mit einer anderen Anzahl und/oder Geometrie von Aussparungen ausgebildet ist. Aussparungen sind als Durchgangsöffnungen, ausgebildet. In einer bevorzugten Weiterbildung fungieren sie zusätzlich als Leitung für ein Fluid, insbesondere ein Kühlfluid. Allgemein können Aussparungen leer, von Fluid durchströmt oder auch mit einem schaufelfremden, insbesondere leichteren oder schwereren, Material ganz oder teilweise gefüllt sein.

Zusätzlich oder alternativ können Deckbänder unterschiedliche Steifigkeiten aufweisen, insbesondere Biege- und/oder Torsionssteifigkeiten. Solche unterschiedlichen Steifigkeiten können insbesondere ebenfalls durch Aussparungen oder Materialanhäufungen dargestellt werden.

Vorzugsweise kontaktieren Deckbänder benachbarter Schaufeln einander, unter denen vorliegend insbesondere radial außenliegende, fluidleitende, d.h. einen Strömungskanal definierende, Flächen verstanden werden, die sich vorzugsweise wenigstens im Wesentlichen in Umfangsrichtung erstrecken. Deckbänder können mit den strömungsumlenkenden, sich im Wesentlichen in radialer Richtung erstreckenden, Schaufelblättern und/oder mit benachbarten Deckbändern lösbar oder unlösbar verbunden, insbesondere integral ausgebildet sein.

Unterschiedliche Deckbänder können in einer bevorzugten Ausführung unterschiedliche Geometrien, insbesondere fluidführende Geometrien, Kontaktgeometrien und/oder fluidabgewandte Geometrien aufweisen. Hierdurch können zum Einen die vorgenannten unterschiedlichen Massen(verteilungen) bzw. Trägheitsmomente und/oder Steifigkeiten dargestellt werden, indem etwa benachbarte Deckbänder unterschiedliche Wandstärken, Formen oder dergleichen aufweisen. Zusätzlich oder alternativ zu solchen Trägheitseigenschaften kann nach einem weiteren Aspekt der vorliegenden Erfindung hierdurch auch eine lokal unterschiedliche Anregung dargestellt werden: so kann durch unterschiedliche, einander kontaktierende Konturen von benachbarten Deckbändern , die vorliegend als Kontaktgeometrien bezeichnet werden, die Schwingungsübertragung bzw. Koppelung zwischen benachbarten Schaufeln variiert werden. Zusätzlich oder alternativ kann durch Variation der Oberfläche der Deckbänder, die dem Arbeitsfluid der Turbomaschine zugewandt ist bzw. dieses kontaktiert, die fluidinduzierte Anregung auf die einzelnen Schaufeln variiert werden. In einer bevorzugten Weiterbildung unterscheidet sich insbesondere die zwei- oder dreidimensionale Strömungspfadkontur am Übergang zwischen Schaufelblatt und Deckband zwischen benachbarten Schaufeln.

Zusätzlich zu der erfindungsgemäß planmäßig unterschiedlichen Ausbildung von Deckbändern können zwei oder mehr Schaufeln der Schaufelanordnung planmäßig unterschiedliche Schaufelblätter aufweisen. Unterschiedliche Schaufelblätter können sich entsprechend insbesondere hinsichtlich ihrer Massen, Massenverteilungen, Trägheitsmomente und/oder Konturen, insbesondere Skelettlinien, Profile, Profildicken, Schrägungen bzw. Pfeilungen oder dergleichen unterscheiden.

Gamma-Titanaluminide (γ-TiAl) stellen einen vorteilhaften Werkstoff für insbesondere schnelllaufende Turbomaschinen dar. Nachteilig weisen sie jedoch regelmäßig ein schlechteres Kriechverhalten als herkömmliche Laufschaufelmaterialien, beispielsweise auf Nickelbasis, auf. Entsprechend ist eine erfindungsgemäße Verstimmung der Laufschaufeln gegeneinander insbesondere bei Schaufelanordnungen vorteilhaft, deren Schaufeln allgemein eine intermetallische Verbindung, insbesondere mit Titan und/oder Aluminium, vorzugsweise γ-TiAl, aufweisen. Solche Schaufeln können, wenigstens im Wesentlichen, aus der Verbindung, insbesondere γ-TiAl, bestehen oder eine Beschichtung hieraus aufweisen.

Erfindungsgemäß sind Deckbänder planmäßig unterschiedlich. Dabei kann die Anordnung unterschiedlicher Laufschaufeln am Umfang des Rotors selber stochastisch erfolgen. Beispielsweise kann eine Sortierung unterschiedlicher Laufschaufeln wahllos über dem Umfang verteilt werden. In einer bevorzugten Weiterbildung sind jedoch unterschiedliche Schaufeln ihrerseits planmäßig über den Umfang des Rotors verteilt. Hierunter wird insbesondere verstanden, dass für bestimmte Schaufeln ein bestimmter Ort oder Bereich am Umfang des Rotors oder für einen bestimmten Ort oder Bereich eine bzw. mehrere Schaufel(n) mit bestimmten Eigenschaften, beispielsweise bestimmtem Gewicht, vorgegeben wird. Insbesondere hierdurch können in einer bevorzugten Weiterbildung die unterschiedlichen Schaufeln so verteilt werden, dass sich Unterschiede, insbesondere Massen- oder Massenverteilungsunterschiede, wenigstens im Wesentlichen gegenseitig kompensieren. Insbesondere kann eine Massenverteilung der Schaufelanordnung als Ganzes über den Umfang so ausgewuchtet werden. Rein exemplarisch können beispielsweise abwechselnd Schaufel oder Gruppen von zwei oder mehr Schaufeln über den Umfang verteilt werden, die eine bzw. keine leere Aussparung in ihrem Deckband aufweisen, so dass sich die Gewichtsunterschiede über den Umfang, wenigstens im Wesentlichen, kompensieren.

Eine erfindungsgemäße Schaufelanordnung ist insbesondere in schnelllaufenden Turbomaschinen, insbesondere Gasturbinen wie Flugtriebwerken, und in solchen insbesondere in Niederdruckturbinen, vorteilhaft. Eine erfindungsgemäße Schaufelanordnung kann sich allgemein in Umfangs- und/oder Axialrichtung erstrecken und so insbesondere eine oder mehrere Stufen einer Turbomaschine bilden. Entsprechend können unterschiedliche Schaufeln in Umfangs- und/oder Axialrichtung benachbart sein.

Weitere Vorteile und Merkmale ergeben sich aus den Unteransprüchen und dem Ausführungsbeispiel. Hierzu zeigt, teilweise schematisiert, die:
- Fig. 1:: einen Schnitt durch zwei benachbarte Laufschaufeln;
- Fig. 2:: die zwei benachbarten Laufschaufeln der Fig. 1 von radial außen; und
- Fig. 3:: eine der Laufschaufeln der Fig. 1, 2 in perspektivischem Teilschnitt.

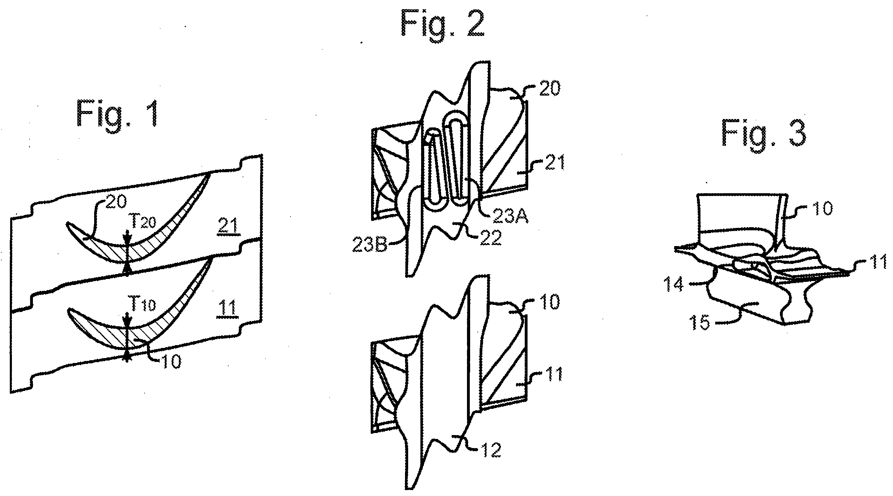

Fig. 1 zeigt einen Schnitt durch zwei in Umfangsrichtung (vertikal in Fig. 1) benachbarte Laufschaufeln einer Turbinenstufe von radial außen. Man erkennt die geschnittenen Schaufelblätter 10, 20 sowie die kontaktierenden inneren Schaufelplattformen 11, 21. Im Schnitt erkennt man, dass die beiden benachbarten Laufschaufeln unterschiedliche Schaufelblätter, insbesondere unterschiedliche Profildicken bzw. - stärken T₁₀, T₂₀ aufweisen.

Fig. 2 zeigt - zur Verdeutlichung in Umfangsrichtung auseinandergezogen dargestellt, die beiden Schaufeln der Fig. 1, wiederum radial von außen, jedoch ungeschnitten. Man erkennt wiederum die - in Fig. 2 ungeschnittenen - Schaufelblätter 10, 20 sowie die - aufgrund der auseinandergezogenen Darstellung in Fig. 2 nicht kontaktierenden - inneren Schaufelplattformen 11, 21. Zudem erkennt man in Fig. 2 die einem Arbeitsfluid bzw. Strömungskanal, der durch die einander zugewandten Oberflächen von inneren Schaufelplattformen und Deckbändern definiert wird, abgewandten, radial außenliegenden Oberflächen von Deckbändern 12, 22. Wie die inneren Schaufelplattformen 11, 21 kontaktieren auch die Deckbänder 12, 22 der in Umfangsrichtung benachbarten Schaufeln einander im eingebauten Zustand und sind in Fig. 2 nur zur Verdeutlichung in Umfangsrichtung auseinandergezogen dargestellt.

Die Deckbänder 12, 22 sind erfindungsgemäß unterschiedlich ausgestaltet: während das Deckband 12 im Wesentlichen ein Vollmaterial ist und eine glatte, radial außenliegende Oberfläche (auf die man in Fig. 2 sieht) aufweist, ist in der entsprechenden Oberfläche des Deckbandes 22 eine Aussparungsanordnung mit zwei ringkanalförmigen Aussparungen 23A, 23B ausgebildet. Hierdurch weist das Deckband 22 eine gegenüber dem Deckband 12 unterschiedliche Masse, Massenverteilung und ein unterschiedliches Trägheitsmoment insbesondere um eine Biege- und eine Torsionsachse der Schaufelblätter 10, 20 auf, so dass auch die Eigenmoden der beiden Schaufeln gegeneinander verstimmt sind.

Fig. 3 zeigt die in Fig. 1, 2 untere Laufschaufel in einem perspektivischem Teilschnitt. Man erkennt einen Teil des Schaufelblattes 10 sowie die innere Schaufelplattform 11 und den Schaufelfuß 15. In diesem ist - im Gegensatz zu der als Vollmaterial ausgebildeten inneren Plattform 21 der benachbarten Schaufel (nicht dargestellt) - eine Aussparung 14 ausgebildet, so dass auch die inneren Schaufelplattformen 11, 21 unterschiedliche Massen, Massenverteilungen und Steifigkeiten aufweisen, so dass auch hierdurch die Eigenmoden der beiden Schaufeln gegeneinander verstimmt sind.

Des Weiteren ist die fluidführende Geometrie am Übergang zwischen Schaufelblatt 10 und -fuß 11 von der Geometrie der benachbarten Schaufel (nicht dargestellt) verschieden, so dass hierdurch die Anregung auf die beiden benachbarten Schaufeln variiert.

### Bezugszeichenliste

- 10, 20: Schaufelblatt
- 11, 21: innere Schaufelplattform
- 12, 22: Deckband
- 14, 23A, 23B: Aussparung
- 15: Schaufelfuß

## Patentansprüche

1. Laufschaufelanordnung für eine Turbomaschine, insbesondere eine Gasturbine, mit einem Rotor und mehreren daran befestigten Schaufeln, welche planmäßig unterschiedlich ausgebildet sind, wobei wenigstens zwei benachbarte Schaufeln planmäßig unterschiedliche Deckbänder (12, 22) aufweisen, wobei die unterschiedlichen Deckbänder unterschiedliche fluidabgewandte, radial außenliegende Oberflächen aufweisen, **dadurch gekennzeichnet, dass** in einem Deckband einer Schaufel eine Aussparungsanordnung mit wenigstens
einer Durchgangsöffnung (23A, 23B) ausgebildet ist, und in einem Deckband einer benachbarten Schaufel keine oder eine andere Aussparungsanordnung mit einer anderen Anzahl und/oder Geometrie von Durchgangsöffnungen ausgebildet ist.

2. Laufschaufelanordnung nach Anspruch 1, **dadurch gekennzeichnet, dass** die Durchgangsöffnung bzw. Durchgangsöffnungen (23A, 23B) als Leitung für ein Fluid, insbesondere Kühlfluid, fungiert bzw. fungieren.

3. Laufschaufelanordnung nach einem der vorhergehenden Ansprüche, **dadurch gekennzeichnet, dass** die Schaufeln eine intermetallische Verbindung, insbesondere mit Titan und/oder Aluminium, vorzugsweise γ-TiAl, aufweisen.

4. Laufschaufelanordnung nach einem der vorhergehenden Ansprüche, **dadurch gekennzeichnet, dass** wenigstens zwei benachbarte Schaufeln planmäßig unterschiedliche Schaufelblätter (10, 20) aufweisen.

5. Laufschaufelanordnung nach einem der vorhergehenden Ansprüche, **dadurch gekennzeichnet, dass** unterschiedliche Schaufeln planmäßig so über den Umfang des Rotors verteilt sind, dass sich Unterschiede, insbesondere Massen- oder Massenverteilungsunterschiede, wenigstens im Wesentlichen, gegenseitig kompensieren.

6. Turbomaschine, insbesondere Gasturbine, mit einer Laufschaufelanordnung nach einem der vorhergehenden Ansprüche.

7. Verfahren zur Herstellung einer Laufschaufelanordnung nach einem der vorhergehenden Ansprüche 1 bis 6, **dadurch gekennzeichnet, dass** unterschiedliche Schaufeln sortiert und/oder planmäßig hergestellt werden.

## Claims

1. A rotor-blade arrangement for a turbo-engine, in particular a gas turbine, having a rotor and a plurality of blades secured thereto that are formed differently according to plan, wherein at least two adjacent blades have shroud bands (12, 22) that are different according to plan, wherein the different shroud bands have different, fluid-remote, radially external surfaces, **characterised in that** a recess arrangement having at least one through-opening (23A, 23B) is formed in a shroud band of one blade, and no or a different recess arrangement having a different number and/or geometry of through-openings is formed in a shroud band of an adjacent blade.

2. A rotor-blade arrangement according to claim 1, **characterised in that** the through-opening or through-openings (23a, 23B) functions or function as a line for a fluid, in particular a cooling fluid.

3. A rotor-blade arrangement according to one of the preceding claims, **characterised in that** the blades have intermetallic compound, in particular with titanium and/or aluminium, preferably γ-TiAl.

4. A rotor-blade arrangement according to one of the preceding claims, **characterised in that** at least two adjacent blades have blade vanes (10, 20) that are different according to plan.

5. A rotor-blade arrangement according to one of the preceding claims, **characterised in that** different blades are distributed over the circumference of the rotor according to plan in such a way that differences, in particular mass or mass-distribution differences, mutually compensate for each other, at least substantially.

6. A turbo-engine, in particular a gas turbine, having a rotor-blade arrangement according to one of the preceding claims.

7. A method for producing a rotor-blade arrangement according to one of the preceding claims 1 to 6, **characterised in that** different blades are produced in a sorted and/or planned manner.

## Revendications

1. Agencement d'aubes mobiles pour une turbomachine, en particulier une turbine à gaz, avec un rotor et plusieurs aubes fixées sur celui-ci, configurées pour être systématiquement différentes, où au moins deux aubes contiguës présentent des bandages (12, 22) systématiquement différents, lesdits bandages différents présentant différentes surfaces non contactées par le fluide radialement extérieures, **caractérisé en ce qu'**
un agencement d'évidement avec au moins une ouverture de passage (23A, 23B) est formé dans un bandage d'une aube, et **en ce qu'**aucun agencement d'évidement, sinon un autre agencement d'évidement avec un autre nombre et/ou une autre géométrie d'ouvertures de passage, n'est formé dans un bandage d'une aube contiguë.

2. agencement d'aubes mobiles selon la revendication 1, **caractérisé en ce que** l'ouverture de passage ou les ouvertures de passage (23A, 23B) servent de conduite pour un fluide, en particulier un fluide de refroidissement.

3. Agencement d'aubes mobiles selon l'une des revendications précédentes, **caractérisé en ce que** les aubes présentent une connexion intermétallique, en particulier avec du titane et/ou de l'aluminium, préférentiellement du γ-TiAl.

4. Agencement d'aubes mobiles selon l'une des revendications précédentes, **caractérisé en ce qu'**au moins deux aubes contiguës présentent systématiquement des pales (10, 20) différentes.

5. Agencement d'aubes mobiles selon l'une des revendications précédentes, **caractérisé en ce que** différentes aubes sont systématiquement distribuées sur la périphérie du rotor, de telle manière que des différences, en particulier des différences de masses ou de répartition de masses se compensent au moins sensiblement mutuellement.

6. Turbomachine, en particulier turbine à gaz, avec un agencement d'aubes mobiles selon l'une des revendications précédentes.

7. Procédé de fabrication d'un agencement d'aubes mobiles selon l'une des revendications 1 à 6, **caractérisé en ce que** différentes aubes sont triées et/ou systématiquement fabriquées.
